# EUROPEAN PATENT SPECIFICATION

(11) **EP 1 983 520 B1**
(45) Date of publication and mention of the grant of the patent: **19.11.2014**
(21) Application number: 07008002.3
(22) Date of filing: 19.04.2007
(51) Int. Cl.: G11B 20/18, G11B 27/10, G11B 27/36

(54) **Test data unit, system, and method for testing a playback device**
Testdateneinheit, System und Verfahren zum Testen eines Wiedergabegerätes
Unité de données de test, système et procédé pour tester un dispositif de lecture

(43) Date of publication of application: 22.10.2008
(73) Proprietor: Harman Becker Automotive Systems GmbH, 76307 Karlsbad (DE)
(72) Inventor: Kampf, Peter, 72764 Reutlingen (DE); Kratzsch, Thomas, 71634 Ludwigsburg (DE)
(74) Representative: Bertsch, Florian Oliver

(56) References cited:
- DE-A1- 4 022 230
- GB-A- 2 413 431
- US-B1- 6 639 878
- KLAUS SCHIFFNER, MARCO BRUSATI: "Measurements on CD Players using the Audio Analyzers UPL or UPD and the Audio Test Disc UPA-CD" ROHDE&SCHWARZ, [Online] March 1995 (1995-03), XP002454414 Retrieved from the Internet: URL:http://www.rohde-schwarz.com/www/downc ent.nsf/ANFileByANNoForInternet/661D72DBD9 A2299EC1256B6000468789/$file/1GA21_1E.pdf> [retrieved on 2007-10-10]
- "Playback Compatibility Specification for CD and DVD Consumer Devices" OPTICAL STORAGE TECHNOLOGY ASSOCIATION (OSTA), [Online] 11 July 2001 (2001-07-11), XP002454415 Retrieved from the Internet: URL:http://www.osta.org/specs/pdf/MultiPla y110.pdf> [retrieved on 2007-10-10]
- SLATTERY O T: "DVD-ROM DRIVE COMPATIBILITY TEST FOR DVD-R(GENERAL), DVD-RW, DVD+R, DVD+RW AND DVD-RAM DISCS (PHASE 1)" INTERNET CITATION, [Online] 12 October 2003 (2003-10-12), XP002319828 Retrieved from the Internet: URL:http://www.itl.nist.gov/div895/docs/DV D-ROMDriveCompatibilityTestOct12.p> [retrieved on 2005-03-02]
- INTERNATIONAL BUSINESS MACHINES CORPORATION: "JMF Test Tool" RESEARCH DISCLOSURE, MASON PUBLICATIONS, HAMPSHIRE, GB, vol. 430, no. 199, February 2000 (2000-02), XP007125661 ISSN: 0374-4353

## Description

The present invention relates to a test data unit, a system for testing a playback device, and a method for testing a playback device, especially for testing a playback device adapted to play back digital audio and/ or video media.

### Related Art

Modern playback devices, for example a DVD player, a navigation system for a vehicle, a car radio system or a car entertainment system, are adapted to play back a number of different media providing digitally-coded audio and video data, for example a CD, a DVD, a memory card, or a memory stick. Each of this media may comprise a variety of different files comprising digitally-coded audio and video data. Additionally, the media may comprise other data than video or audio data at the same time. The files comprising audio data may be coded in different formats, for example WAV format, MP3 format, AAC or AAC+ format, CD-A format, DVD-A format or SACD format. The files comprising the audio data may be organized on the media in different structures comprising directories containing the files or containing sub-directories containing the files and so on. As an alternative, the files may be arranged on the media as tracks like on conventional CDs or may be arranged in a combination of tracks and structured files.

A modern playback device for playing back such media should be adapted to handle a predefined or specified set of coding schemes for the audio and video data and should be furthermore adapted to play back several files according to a predefined scheme, especially in case of structured directories containing the files to be played back.

Furthermore, the playback device has to be capable upon requests from a user of the playback device which are input for example via controls of the playback device, to play back a desired file or portion of a file, for example when the user selects the next or the previous file or directly selects a specific file or "jumps" forward and backward within one file.

For testing, if a hardware or software or a combination of hardware and software of the playback device is designed properly to cope with the required coding formats and file structures, a lot of testing has to be performed, comprising a play back of all specified coding formats contained in files within more or less complex file structures verifying both the correct decoding of the coded audio data and the playing back of the appropriate file.

Conventionally, a testing like this is performed manually by a person inserting a DVD or CD or memory card or memory stick into the playback device to be tested and instructing the playback device via the controls of the playback device to play back the files of the inserted media. Then, by listening to the audio data played back by the playback device, the person can verify, if the playback device is working correctly. This testing is very time consuming, for example especially when testing long audio files like an audio book, and may be very error-prone especially in case of audio files having a similar content, and furthermore, the assessment of the quality of the played back audio data depends on the capabilities of the person listening to the played back audio data. This results in high testing costs due to the long testing time requiring a test person to listen to the playback device and a poor test coverage.

GB-A-2413431 discloses a system and a method for testing a digital content player such as a DVD player by playing on it content which has an identifiable output which is used to indicate the current position and hence the progress of the player through the content. A DVD to be played back in the DVD player to be tested comprises a number of audiovisual assets. At least one of the video or audio assets is encoded to have an associated unique identifier or to contain data from which such identification data can be derived. A sampler receives the audio or video signals and compares the identification data extracted therefrom with identification data received from a referenced DVD player to prove the correct functioning of the DVD player to be tested.

In the Rohde&Schwarz Application Note 1GA21_1E by Klaus Schiffner and Marco Brusati "Measurements on CD Players using the Audio Analyzers UPL or UPD and the Audio Test Disc UPA-CD" (March 1995, XP002454414) a method and system for analyzing the quality of CD players is disclosed, wherein an audio test disc is used for generating test signals. The CD player to be tested is connected with an audio analyzer receiving the audio data reproduced by the CD player using the test CD.

### Summary of the Invention

Therefore, there is a need to provide an improved method for testing a playback device during a system test and a need for appropriate devices supporting the improved test method to reduce the manpower needed for testing the correct operation of the playback device, to increase the test coverage, and to provide reproducible tests during the system test phase of the newly developed playback device.

According to the present invention, these needs are met by a test data unit to be played back in a playback device for playing back audio data as defined in claim 1, a system for testing a playback device as defined in claim 9, a control unit for testing a playback device as defined in claim 12, and a method for testing a playback device as defined in claim 15. The dependent claims define preferred and advantageous embodiments of the invention.

According to an aspect of the invention, a test data unit is provided. The test data unit may comprise a digital data storage medium, for example a CD, a DVD, a USB stick, or a memory card. The test data unit is adapted to be played back in a playback device, for example a DVD player, a CD player, a car audio system comprising a CD or DVD player, or a car entertainment system comprising a CD or a DVD player or adapted to play back audio data provided by a memory card or a memory stick connected to the car entertainment system. The test data unit comprises a plurality of files comprising audio data adapted to be played back as an audio signal, wherein the audio data of each file of the plurality of files comprises an identification section identifying the file. The identification section is configured to be played back by the playback device as said audio signal, and therefore the played back audio signal of the identification section enables an identification of said identification section of said file.

When a test data unit as described above, is played back in a playback device to be tested, the identification section comprised in the audio data being played back by the playback device enables to test, if the audio data is played back correctly, i.e. the decoding of the digitally-coded data is performed correctly according to the correct decoding scheme, and to test, if the correct file is being played back by the playback device. This allows for a reliable and efficient testing of the playback device during a system test phase of the development of the playback device.

The audio data of the plurality of files is coded in different formats, wherein the audio data of a first file of the plurality of files is coded according to a first format of the different formats and the audio data of a second file of the plurality of files is coded according to a second format of the different formats. That means that within one test data unit different files are coded according to different formats. The different formats may comprise, for example a WAV format, an MP3 format, an AAC format, an AAC+ format, a CD format, a CD-A format, a DVD-A format, a DVD format, or an SACD format. As the test data units comprise a plurality of files coded according to different formats, an audio data decoder of the playback device can be tested, if it is adapted to play back the required audio formats.

According to an embodiment, the audio signal of the identification section of the test data unit comprises a digitally-coded information. The digitally-coded information may comprise a frequency shift keying signal (FSK signal). By using a digitally-coded information as the identification section, the playback device to be tested can be tested easily electronically within a test system, as the frequency shift keying signal of the identification section can be easily used by a test system for verifying if the decoding of the audio signal works properly and if the correct file is currently played.

The audio signal may comprise frequencies in the range of 0-24 kHz, and therefore the audio signal of the identification section being played back by the playback device to be tested, also comprises an audio signal in the frequency range of 0-24 kHz. By using this frequency range within the human audible range which is normally used for audio signals provided by data storage media providing audio signals, the playback device to be tested can be used without any modifications for playing back the test data unit and the test system listening to the playback device simply listens to the audio signals being played back by the playback device. This enables very easy and reliable testing of the playback device as no special test ports have to be provided at the playback device.

According to another embodiment of the invention, the audio data of each file of the test data unit comprises several identification sections, wherein each identification section of the several identification sections comprises a test data unit identifier, a file identifier, and a file position identifier. The test data unit identifier is an identifier identifying the test data unit, for example via a unique code assigned to the test data unit, for distinguishing several test data units. The file identifier identifies the file on the test data unit that contains the identification section. The file identifier may contain a unique code for identifying the file or a unique file name as it is used in a regular file system for identifying a file. The file position identifier identifies the position of the identification section containing the file position identifier, wherein the position may be for example a counter counting the file position identifiers within one file or a counter for time units for uniquely identifying a position within the file. Furthermore, each identification section may have a constant length of, for example 0.5 seconds, and the file position identifier may count the time units in units of 0.5 seconds.

A test data unit comprising identification sections as stated above, is especially adapted for testing a playback device when a playback control determining the file order to be played back and determining a positioning within a file shall be tested. Then, the file identifiers and the file position identifiers help to verify, if the controlled requests are performed properly. Furthermore, with the file identifier and the file position identifier, the correct order of the audio data being played back can be verified, even in cases when the playback is interrupted by, for example by a traffic message from a broadcast radio receiver combined with the playback device within a car radio system. Furthermore, the resistance against shocks due to vibrations or movements of the playback device can be verified. By comprising the test data unit identifier within the identification sections, the correct operation of a playback device adapted to receive several data carrier media at the same time, for example a car radio system adapted to receive a CD or DVD and a memory card, or a car radio system comprising a CD changer, can be easily and reliably tested.

According to another aspect of the present invention, a system for testing a playback device is provided. The system comprises the playback device to be tested, a test data unit as described above, and a control unit as will be described in detail below. The playback device is adapted to play back audio data as an audio signal, wherein the audio data is provided to the playback device, for example as a CD, a DVD, or a semiconductor mass storage media, like a memory card or a memory stick. A test data unit, e.g. in the form of a CD, DVD or a semiconductor mass storage medium, is adapted to be played back in the playback device, wherein the test data unit comprises a plurality of files comprising audio data adapted to be played back as an audio signal, wherein the audio data of each file of the plurality of files comprises an identification section identifying the file, wherein the identification section is configured to be played back by the playback device as said audio signal. The control unit receives said audio signal of the playback device playing back the test data unit and the control unit verifies whether a received identification section of the received audio signal corresponds to an expected identification section.

The control unit comprises a lookup table comprising a sequence of predetermined portions of predetermined files of the test data unit and the corresponding expected identification sections and the control unit controls the playback device to be tested to play back sequentially each of the predetermined portions. Then, the control unit may be adapted to verify for each of the predetermined portions if a received identification section of the predetermined portion, when played back, corresponds to the corresponding expected identification section of the lookup table.

A control unit like this is adapted to automatically perform complex tests for verifying, if the playback device to be tested plays back in response to a control of the playback device the desired file or portion of a file as required. This enables a very efficient testing of the playback device during the system test phase without having the need of human interaction and providing a large test coverage.

A system as stated above enables to test the playback device electronically without the need to add special test ports to the playback device to be tested, as the control unit receives the regular audio signals being played back by the playback device and verifies the identification section comprised in the audio signal against an expected identification section. This provides a very easy and cost efficient testing of the playback device, as no human being for listening to the audio data being played back is necessary for testing the device.

According to an embodiment, the control unit is configured to control the playback device to be tested to play back a predetermined file of the test data unit. Furthermore, the control unit may be configured to control the playback device to be tested to play back a predetermined portion of a predetermined file of the test data unit.

According to another aspect of the invention, a control unit for testing a playback device is provided. The playback device to be tested is adapted to play back audio data as an audio signal and is equipped with a test data unit as described above adapted to be played back in the playback device. The test data unit comprises a plurality of files comprising audio data adapted to be played back as an audio signal, wherein the audio data of each file comprises an identification section identifying the file, wherein the identification section is configured to be played back by the playback device as the audio signal. The control unit comprises a receiver receiving said audio signal of the playback device playing back the test data unit and a verifier verifying if the received identification section of the received audio signal corresponds to an expected identification section.

The control unit comprises a playback device controller controlling the playback device to be tested to play back a predetermined file of the test data unit or to play back a predetermined portion of a predetermined file of the test data unit. Furthermore, the control unit comprises a lookup table comprising a sequence of predetermined portions of predetermined files of the test data unit and the corresponding expected identification sections, wherein the playback device controller controls the playback device to be tested to play back sequentially each of the predetermined portions. The verifier of the control unit may then be adapted to verify for each of the predetermined portions if a received identification section of the predetermined portion being played back corresponds to the corresponding expected identification section of the lookup table.

The control unit as defined above may be used during the system test of a playback device within a system for testing a playback device as stated above and provides therefore the same advantages as stated above.

According to another aspect of the present invention a method for testing a playback device is provided. The method comprises a playing back of a test data unit as described above in the playback device to be tested, wherein the test unit comprises a plurality of files comprising audio data adapted to be played back as an audio signal, the audio data of each file of the plurality of files comprising an identification section identifying the file, wherein the identification section being configured to be played back by the playback device as said audio signal, a controlling the playback device to be tested to playback sequentially predetermined portions of predetermined files of the test data unit, wherein a lookup table comprises the sequence of the predetermined portions of the predetermined files of the test data unit and the corresponding expected identification sections, and a verifying if, upon playing back the plurality of files of the test data unit by the playback device, the audio signal played back by the playback device comprises the expected identification section.

This method for testing a playback device provides an efficient and cost effective testing of a playback device during a system test phase of the playback device and provides a large test coverage. Furthermore, as the method may be used in combination with the test data unit and the system as stated above, the method may be performed by the system for testing a playback device as stated above requiring only very little human interaction for testing the playback device and thus reducing the costs for testing the playback device.

### Brief Description of the Drawings

The invention will now be described in more detail with reference to the accompanying drawings, in which:
Fig. 1 shows a test data unit according to the present invention comprising a file structure with files comprising identification sections.
Fig. 2 shows a system for testing a playback device according to the present invention.

### Detailed Description of the Preferred Embodiments

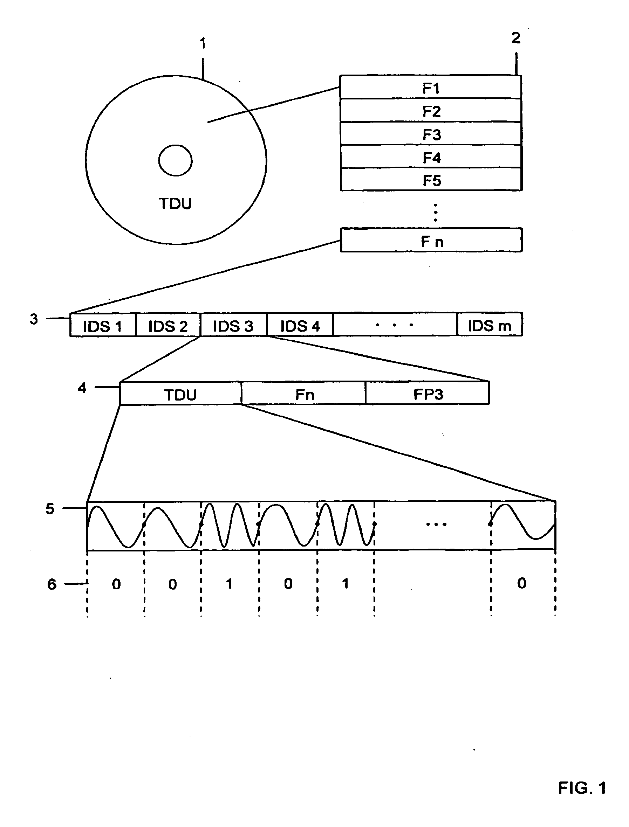

Fig. 1 shows a test data unit 1 which may be, for example a CD, a DVD, or a semiconductor mass storage media like a memory card like a CF card or a multimedia card or a memory stick like a USB stick, or may comprise a hard disk which may be contained in a CF card or connectable to a playback device via a USB or firewire connection or the like. The test data unit comprises a plurality of files 2 which may be arranged on the test data unit 1 as a sequence of music tracks as on a traditional audio CD, or as a structured file system comprising, for example a root directory and a hierarchy of sub-directories containing the plurality of files. Finally, any combination of file structures may be comprised within the plurality of files 2.

Each of the files F1, F2, F3 ... Fn of the plurality of files 2 may comprise audio data or non-audio data. The audio data is digitally coded, for example according to any of the following formats: WAV, MP3, AAC, AAC+, CD-A, DVD-A, SACD, MPEG4, DIVX, or any other known format comprising audio data. Furthermore, some of the files F1-Fn may comprise non-audio data, comprising for example video data related to another file comprising audio data or non-audio data as for example program data or data for a navigation system not being intended to played back as audio data.

Each of the files F1-Fn containing audio data comprises a list of identification sections identifying the file. In Fig. 1, as an example, file Fn is shown in more detail as a file 3 comprising a plurality of identification sections IDS1, IDS2, IDS3, IDS4, ... IDSm. Although the file 3 shown in Fig. 1 consists of the sequence of identification sections IDS1-IDSm, the file 3 may, as an alternative, comprise only one identification section or a few identification sections and may additionally comprise any other kind of audio data.

Each of the identification sections of the file 3 contains three fields, a first identifying the test data unit, named TDU in Fig. 1, a second identifying the file, named Fn in Fig. 1, and a third identifying a file position within the file, named FP3 in Fig. 1. Each of the fields TDU, Fn and FP3 of the identification section 4 comprises an audio signal 5 coding a sequence of binary values 6 as a frequency shift keying audio signal as shown with reference sign 5. By alternating the frequency of the audio signal within regular intervals, the coding of the binary values is accomplished. A value of "0" of the binary value may be represented in the audio signal 5 as a first frequency f1 and a value of "1" of the binary signal may be represented as another frequency f2 in the audio signal 5. This frequency shift keying coding is a well-known and easy to implement method, already used in facsimile applications and analog modems for a computer communication or the like.

With the help of the frequency shift keying coding, the identification sections 4 provide the following digitally-coded information: In the first field of the identification section 4 a test data unit identifier is provided as a digitally-coded number or character string or whatever is appropriate. In the second field, the Fn field, the file name of the file containing the identification section 4 is coded as a character string or a number in a binary form. Finally, in the third field of the identification section 4 a file position identifier FP3 is coded, which may contain, for example a counter numbering the identification sections IDS1-IDSm of the file 3 from 1-n. As an alternative, the file position identifier FP3 may contain a time information indicating the playing time from the beginning of the file 3 to the beginning of the identification section the file position identifier is contained in.

In the embodiment of Fig. 1, the whole file 3 consists of identification sections only and each of the identification sections IDS 1-IDSm has the same lengths of, for example 0.5 seconds or for example of 1 second. Nevertheless, any other length or even a variable length may be implemented.

Although not shown in Fig. 1, the identification section 4 of the file 3 may comprise additional information, for example information about the type of media carrying the identification section, for example DVD, CD, or memory card, a file type of the file, for example MP3, AAC, AAC+, WAV, CD-A, and so on, the position within a hierarchical file system or a level of a subdirectory structure, and so on.

In the following, the use of the test data unit 1 for testing a playback device playing back the test data unit 1 will be described in detail.

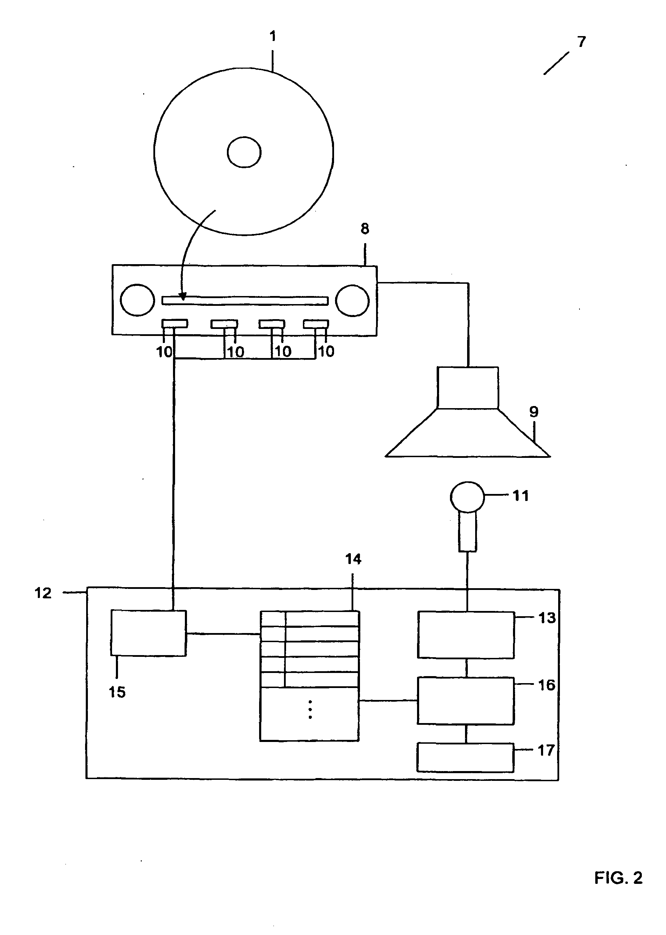

Fig. 2 shows a system 7 for testing a playback device 8. The test data unit 1 as described above is inserted into the playback device 8 to be tested and the playback device 8 is connected with its audio output to a loudspeaker 9. The playback device 8 comprises controls 10 for controlling the playback of the test data unit 1 inserted into the playback device 8. These controls 10 may comprise buttons or any other kind of actuators for instructing the playback device 8 to start playing back the data of test data unit 1, stop the playback, skip forward or skip backward to a specific file or to start playing back or continue playing back at a specific file or a specific position within a file.

The audio data being played back by the playback device 8 are transmitted via sound waves from the loudspeaker 9 to a microphone 11 which is connected to a control unit 12 for testing the playback device 8. The control unit 12 comprises a receiver 13 receiving the audio signal detected by the microphone 11 and decoding the received audio signal according to a frequency shift keying coding method extracting the digitally-coded data 6 of the identification section 4 of a file 3 of the test data unit 1 being played back by the playback device 8.

The system 12 further comprises a lookup table 14 comprising a sequence of predetermined portions of predetermined files of the test data unit 1 and the corresponding expected identification sections. The information of the lookup table 14 about the predetermined portions of predetermined files is supplied to a playback device controller 15 and a verifier 16. Upon providing the information comprising a predetermined portion of a predetermined file from the lookup table 14 to the playback device controller 15, it controls via a connection to the controls of the playback device 8 the playback device 8 such that the playback device 8 is instructed to play back the predetermined portions of the predetermined files. At the same time the verifier 16 is provided with the expected identification sections corresponding to the predetermined portions of predetermined files and compares the identification sections received via the loudspeaker 9 and the microphone 11 from the playback device 8 and decoded via the receiver 13 of the control unit 12 to the expected identification sections. The verifier 16 outputs an appropriate test result information for each verification to the output device 17. The output device 17 collects all the verification results and provides a user of the system 7 with a final result of the test of all the playbacks of the predetermined portions of the predetermined files according to the lookup table 14 indicating the success or the problems found during the verification.

As an alternative, the receiver 13 may be connected directly to the audio output of the playback device 8 instead of detecting the audio information via the microphone 11 connected to the receiver 13 from a loudspeaker 9 connected to the playback device 8. The direct connection is less sensitive to environmental noise and may therefore improve the testing.

Furthermore, a CD changer may be connected to the playback device 8 comprising several test data units 1 and the lookup table 14 and the playback device controller 15 may be adapted to instruct the playback device 8 to play back predetermined portions of predetermined files of the various test data units 1.

Testing the playback device 8 with the system 7 as described above, allows to perform comprehensive tests of the playback device 8, which may comprise a lot of skips and moves between or within files containing audio data of the test data unit 1 inserted in the playback device 8. As these tests are very time consuming, for example when playing back a CD comprising several files containing MP3 coded audio information, testing may last several hours, and an automated testing with a system 7 as proposed above, may save a lot of cost, as no human being has to be present during the testing time. Furthermore, not only a verification, if the desired files or portions or files are being played back upon a control of the playback device 8, can be accomplished, but also the quality of the decoding of the several audio coding schemes supported by the playback device, can be verified. When, for example a decoder of the playback device 8 for decoding AAC+ audio data is not working properly, the frequency shift keying information cannot be decoded properly by the receiver 13 and therefore this malfunction of the decoder of the playback device 8 can be detected by the system 7. Therefore, not only costs for testing the playback device 8 during system tests can be saved, but also the test coverage can be increased and becomes more reliable.

## Claims

1. A test data unit (1) adapted to be played back in a playback device (8) for playing back audio data, the test data unit (1) comprising a plurality of files (2) comprising audio data, the audio data being adapted to be played back by the play back device (8) as an audio signal, wherein the audio data of each file (3) of the plurality of files (2) comprises an identification section (4) identifying the file (3), wherein the identification section (4) is configured to be played back by the playback device (8) as said audio signal, the played back audio signal of the identification section (4) allowing an identification of said identification section (4) of said file (3),
**characterized in that** the audio data is coded in different formats, wherein the audio data of a first file (3) of the plurality of files (2) is coded according to a first format of the different formats and the audio data of a second file (3) of the plurality of files (2) is coded according to a second format of the different formats, and wherein the identification section (4) comprises said audio signal coding a sequence of binary values (6) as a frequency shift keying audio signal (5).

2. The test data unit (1) according to claim 1,
wherein the different formats comprise a WAV format, an MP3 format, an AAC format, a CD-A format, a DVD-A format, or an SACD format.

3. The test data unit (1) according to claim 1 or 2,
wherein said audio signal of the identification section (4) comprises a digitally-coded information (6).

4. The test data unit (1) according to claim 3,
wherein the digitally-coded information (6) of said audio signal comprises a frequency shift keying signal (5).

5. The test data unit (1) according to any of the preceding claims,
wherein, when playing back said audio signal of the identification section (4), the audio signal comprises frequencies in the range of 0-24 kHz.

6. The test data unit (1) according to any of the preceding claims,
wherein the audio data of each file (3) comprises several identification sections (4, IDS1-IDSm), each identification section (4) of the several identification sections (4, IDS1-IDSm) comprising a test data unit identifier (TDU) identifying the test data unit (1), a file identifier (F1-Fn) identifying the file (3) on the test data unit (1) containing the identification section (4), and a file position identifier (FP3) identifying a position of the identification section (4) within the file (3).

7. The test data unit (1) according to any of the preceding claims,
wherein the audio signal of the audio data representing an identification section (4) has a length of 0.5 seconds when being played back by the playback device (8).

8. The test data unit (1) according to any of the preceding claims,
wherein the test data unit (1) comprises a CD, a DVD or semiconductor mass storage media.

9. A system (7) for testing a playback device (8), comprising
- the playback device (8) to be tested, the playback device (8) being adapted to play back audio data as an audio signal,
- a test data unit (1) according to any of claims 1-8, and
- a control unit (12) according to any of claims 12-14.

10. The system (7) according to claim 9, wherein the control unit (12) is configured to control the playback device (8) to be tested to play back a predetermined portion of a predetermined file (3) of the test data unit (1).

11. The system (7) according to claim 9 or 10, wherein the control unit (12) verifies for each of the predetermined portions if a received identification section (4) of the predetermined portion when played back corresponds to the corresponding expected identification section (4) of the lookup table (14).

12. A control unit (12) for testing a playback device (8), the playback device (8) is adapted to play back audio data as an audio signal and is equipped with a test data unit (1) according to any of claims 1-8, the control unit (12) comprises
- a receiver (13) for receiving said audio signal of the playback device (8) playing back the test data unit (1) and for decoding said received audio signal according to a frequency shift keying method extracting the binary values (6) of a received identification section (4) of said received audio signal, and
- a verifier (16) for verifying if the received identification section (4) of the received audio signal corresponds to an expected identification section (4) by comparing said received identification section (4) with said expected identification section,
**characterized in that** the control unit (12) comprises a playback device controller (15) for controlling the playback device (8) to be tested to play back a predetermined file (3) of the test data unit (1), and a lookup table (14) comprising a sequence of predetermined portions of predetermined files (3) of the test data unit (1) and the corresponding expected identification sections (4), the playback device controller (15) being configured to control the playback device (8) to be tested to play back sequentially each of the predetermined portions.

13. The control unit (12) according to claim 12, wherein the control unit (12) comprises a playback device controller (15) for controlling the playback device (8) to be tested to play back a predetermined portion of a predetermined file (3) of the test data unit (1).

14. The control unit (12) according to claim 12 or 13, wherein the verifier (16) of the control unit (12) is configured to verify for each of the predetermined portions if a received identification section (4) of the predetermined portion being played back corresponds to the corresponding expected identification section (4) of the lookup table (14).

15. A method for testing a playback device (8), the method comprises the steps of:
- playing back a test data unit (1) according to any of claims 1-8 in the playback device (8) to be tested,
- receiving said audio signal of the playback device (8) playing back the test data unit (1),
- decoding said received audio signal according to a frequency shift keying method extracting the binary values (6) of a received identification section (4) of said received audio signal, and
- verifying, if, upon playing back the plurality of files (2) of the test data unit (1) by the playback device (8), the audio signal played back by the playback device (8) comprises the expected identification section (4) by comparing said received identification section (4) with said expected identification section, **characterized by** controlling the playback device (8) to be tested to play back sequentially predetermined portions of predetermined files (3) of the test data unit (1), wherein a lookup table (14) comprises the sequence of the predetermined portions of the predetermined files (3) of the test data unit (1) and the corresponding expected identification sections (4).

## Patentansprüche

1. Testdateneinheit (1), die dazu ausgebildet ist, in einer Wiedergabevorrichtung (8) zum Wiedergeben von Audiodaten wiedergegeben zu werden, wobei die Testdateneinheit (1) eine Mehrzahl von Dateien (2) umfasst, die Audiodaten umfassen, wobei die Audiodaten dazu ausgebildet sind, von der Wiedergabevorrichtung (8) als ein Audiosignal wiedergegeben zu werden, wobei die Audiodaten jeder Datei (3) der Mehrzahl von Dateien (2) einen Identifikationsabschnitt (4) umfassen, der die Datei (3) identifiziert, wobei der Identifikationsabschnitt (4) dazu konfiguriert ist, von der Wiedergabevorrichtung (8) als das Audiosignal wiedergegeben zu werden, wobei das wiedergegebene Audiosignal des Identifikationsabschnitts (4) eine Identifikation des Identifikationsabschnitts (4) der Datei (3) ermöglicht,
**dadurch gekennzeichnet, dass** die Audiodaten in unterschiedlichen Formaten codiert sind, wobei die Audiodaten einer ersten Datei (3) der Mehrzahl von Dateien (2) gemäß einem ersten Format der unterschiedlichen Formate codiert sind und die Audiodaten einer zweiten Datei (3) der Mehrzahl von Dateien (2) gemäß einem zweiten Format der unterschiedlichen Formate codiert sind, und wobei der Identifikationsabschnitt (4) das Audiosignal umfasst, das eine Sequenz von Binärwerten (6) als ein Frequenzumtastungsaudiosignal (5) codiert.

2. Testdateneinheit (1) nach Anspruch 1,
wobei die unterschiedlichen Formate ein WAV-Format, ein MP3-Format, ein AAC-Format, ein CD-A-Format, ein DVD-A-Format oder ein SACD-Format umfassen.

3. Testdateneinheit (1) nach Anspruch 1 oder 2,
wobei das Audiosignal des Identifikationsabschnitts (4) digital codierte Informationen (6) umfasst.

4. Testdateneinheit (1) nach Anspruch 3,
wobei die digital codierten Informationen (6) des Audiosignals ein Frequenzumtastungssignal (5) umfassen.

5. Testdateneinheit (1) nach einem der vorangehenden Ansprüche,
wobei bei der Wiedergabe des Audiosignals des Identifikationsabschnitts (4) das Audiosignal Frequenzen im Bereich von 0-24 kHz umfasst.

6. Testdateneinheit (1) nach einem der vorangehenden Ansprüche,
wobei die Audiodaten jeder Datei (3) mehrere Identifikationsabschnitte (4, IDS1-IDSm) umfassen, wobei jeder Identifikationsabschnitt (4) der mehreren Identifikationsabschnitte (4, IDS1-IDSm) einen Testdateneinheitidentifikator (TDU), der die Testdateneinheit (1) identifiziert, einen Dateiidentifikator (F1-Fn), der die Datei an der Testdateneinheit (1) identifiziert, die den Identifikationsabschnitt (4) enthält, und einen Dateipositionsidentifikator (FP3) umfasst, der eine Position des Identifikationsabschnitts (4) innerhalb der Datei (3) identifiziert.

7. Testdateneinheit (1) nach einem der vorangehenden Ansprüche,
wobei das Audiosignal der Audiodaten, die einen Identifikationsabschnitt (4) darstellen, eine Länge von 0,5 Sekunden aufweist, wenn es von der Wiedergabevorrichtung (8) wiedergegeben wird.

8. Testdateneinheit (1) nach einem der vorangehenden Ansprüche,
wobei die Testdateneinheit (1) eine CD, eine DVD oder ein Halbleitermassenspeichermedium umfasst.

9. System (7) zum Testen einer Wiedergabevorrichtung (8), umfassend
- die Wiedergabevorrichtung (8), die getestet werden soll, wobei die Wiedergabevorrichtung (8) dazu ausgebildet ist, Audiodaten als ein Audiosignal wiederzugeben,
- eine Testdateneinheit (1) nach einem der Ansprüche 1-8, und
- eine Steuereinheit (12) nach einem der Ansprüche 12-14.

10. System (7) nach Anspruch 9, wobei die Steuereinheit (12) dazu konfiguriert ist, die Wiedergabevorrichtung (8), die getestet werden soll, zu steuern, um einen im Voraus festgelegten Abschnitt einer im Voraus festgelegten Datei (3) der Testdateneinheit (1) wiederzugeben.

11. System (7) nach Anspruch 9 oder 10, wobei die Steuereinheit (12) für jeden der im Voraus festgelegten Abschnitte verifiziert, ob ein empfangener Identifikationsabschnitt (4) des im Voraus festgelegten Abschnitts bei der Wiedergabe dem entsprechenden erwarteten Identifikationsabschnitt (4) der Nachschlagtabelle (14) entspricht.

12. Steuereinheit (12) zum Testen einer Wiedergabevorrichtung (8), wobei die Wiedergabevorrichtung (8) dazu ausgebildet ist, Audiodaten als ein Audiosignal wiederzugeben, und mit einer Testdateneinheit (1) nach einem der Ansprüche 1-8 ausgestattet ist, wobei die Steuereinheit (12) Folgendes umfasst
- einen Empfänger (13) zum Empfangen des Audiosignals der Wiedergabevorrichtung (8), die die Testdateneinheit (1) wiedergibt, und zum Decodieren des empfangenen Audiosignals gemäß einem Frequenzumtastungsverfahren, das die Binärwerte (6) eines empfangenen Identifikationsabschnitts (4) des empfangenen Audiosignals extrahiert, und
- einen Verifizierer (16) zum Verifizieren, ob der empfangene Identifikationsabschnitt (4) des empfangenen Audiosignals einem erwarteten Identifikationsabschnitt (4) entspricht, indem der empfangene Identifikationsabschnitt (4) mit dem erwarteten Identifikationsabschnitt verglichen wird, **dadurch gekennzeichnet, dass** die Steuereinheit (12) eine Wiedergabevorrichtungssteuerung (15) zum Steuern der Wiedergabevorrichtung (8), die getestet werden soll, um eine im Voraus festgelegte Datei (3) der Testdateneinheit (1) wiederzugeben, und eine Nachschlagtabelle (14) umfasst, die eine Sequenz von im Voraus festgelegten Abschnitten der im Voraus festgelegten Dateien (3) der Testdateneinheit (1) und die entsprechenden erwarteten Identifikationsabschnitte (4) umfasst, wobei die Wiedergabevorrichtungssteuerung (15) dazu konfiguriert ist, die Wiedergabevorrichtung (8), die getestet werden soll, derart zu steuern, dass sie die einzelnen im Voraus festgelegten Abschnitte nacheinander wiedergibt.

13. Steuereinheit (12) nach Anspruch 12, wobei die Steuereinheit (12) eine Wiedergabevorrichtungssteuerung (15) zum Steuern der Wiedergabevorrichtung (8), die getestet werden soll, umfasst, um einen im Voraus festgelegten Abschnitt einer im Voraus festgelegten Datei (3) der Testdateneinheit (1) wiederzugeben.

14. Steuereinheit (12) nach Anspruch 12 oder 13, wobei der Verifizierer (16) der Steuereinheit (12) dazu konfiguriert ist, für jeden der im Voraus festgelegten Abschnitte zu verifizieren, ob ein empfangener Identifikationsabschnitt (4) des im Voraus festgelegten Abschnitts dem entsprechenden erwarteten Identifikationsabschnitt (4) der Nachschlagtabelle (14) entspricht.

15. Verfahren zum Testen einer Wiedergabevorrichtung (8), wobei das Verfahren die folgenden Schritte umfasst:
- Wiedergeben einer Testdateneinheit (1) nach einem der Ansprüche 1-8 in der Wiedergabevorrichtung (8), die getestet werden soll,
- Empfangen des Audiosignals der Wiedergabevorrichtung (8), die die Testdateneinheit (1) wiedergibt,
- Decodieren des empfangenen Audiosignals gemäß einem Frequenzumtastungsverfahren, das die Binärwerte (6) eines empfangenen Identifikationsabschnitts (4) des empfangenen Audiosignals extrahiert, und
- Verifizieren, ob bei Wiedergabe der Mehrzahl von Dateien (2) der Testdateneinheit (1) durch die Wiedergabevorrichtung (8), das von der Wiedergabevorrichtung (8) wiedergegebene Audiosignal den erwarteten Identifikationsabschnitt (4) umfasst, indem der empfangene Identifikationsabschnitt (4) mit dem erwarteten Identifikationsabschnitt verglichen wird, **gekennzeichnet durch** Steuern der Wiedergabevorrichtung (8), die getestet werden soll, um nacheinander im Voraus festgelegte Abschnitte von im Voraus festgelegten Dateien (3) der Testdateneinheit (1) wiederzugeben, wobei eine Nachschlagtabelle (14) die Folge der im Voraus festgelegten Abschnitte der im Voraus festgelegten Dateien (3) der Testdateneinheit (1) und die entsprechenden erwarteten Identifikationsabschnitte (4) umfasst.

## Revendications

1. Unité pour données d'essai (1) conçue pour être lue dans un appareil de lecture (8) destiné à la lecture de données audio, l'unité de données d'essai (1) comprenant un ensemble de fichiers (2) contenant des données audio, les données audio étant conçues pour être lues par l'appareil de lecture (8) sous forme de signaux audio, les données audio de chaque fichier (3) de la pluralité de fichiers (2) comprenant une section d'identification (4) identifiant le fichier (3), la section d'identification (4) étant configurée pour être lue par l'appareil de lecture (8) sous la forme dudit signal audio, le signal audio lu de la section d'identification (4) permettant une identification de ladite section d'identification (4) dudit fichier (3),
**caractérisée en ce que** les données audio sont codées dans différents formats, les données audio d'un premier fichier (3) de la pluralité de fichiers (2) étant codées selon un premier format parmi les différents formats et les données audio d'un deuxième fichier (3) de la pluralité de fichiers (2) étant codée selon un deuxième format parmi les différents formats, et la section d'identification (4) comprenant ledit signal audio codant une séquence de valeurs binaires (6) sous la forme d'un signal audio (5) reflétant une variation de fréquences.

2. Unité pour données d'essai (1) selon la revendication 1,
dans laquelle les différents formats comprennent un format WAV, un format MP3, un format AAC, un format CD-A, un format DVD-A ou un format SACD.

3. Unité pour données d'essai (1) selon la revendication 1 ou 2,
dans laquelle ledit signal audio de la section d'identification (4) comprend des informations codées numériquement (6).

4. Unité pour données d'essai (1) selon la revendication 3,
dans laquelle les informations codées numériquement (6) dudit signal audio comprennent un signal audio (5) reflétant une variation de fréquences.

5. Unité pour données d'essai (1) selon l'une quelconque des revendications précédentes,
dans laquelle, quand on lit ledit signal audio de la section d'identification (4), le signal audio comprend des fréquences comprises entre 0 et 24 kHz.

6. Unité pour données d'essai (1) selon l'une quelconque des revendications précédentes,
dans laquelle les données audio de chaque fichier (3) comprennent plusieurs sections d'identification (4, IDS1-IDSm), chaque section d'identification (4) des diverses sections d'identification (4, IDS1-IDSm) comprenant un identificateur d'unité de données d'essai (TDU) identifiant l'unité de données d'essai (1), un identificateur de fichier (F1-Fn) identifiant le fichier (3) sur l'unité de données d'essai (1) contenant la section d'identification (4) et un identificateur de position de fichier (FP3) identifiant une position de la section d'identification (4) dans le fichier (3).

7. Unité pour données d'essai (1) selon l'une quelconque des revendications précédentes,
dans laquelle le signal audio des données audio représentant une section d'identification (4) a une longueur de 0,5 s lorsqu'elles sont lues par l'appareil de lecture (8).

8. Unité pour données d'essai (1) selon l'une quelconque des revendications précédentes,
dans laquelle l'unité de données d'essai (1) comprend un CD, un DVD ou un support de mémoire auxiliaire à semiconducteur.

9. Système (7) d'essai d'un appareil de lecture (8), comprenant
- l'appareil de lecture (8) à tester, l'appareil de lecture (8) étant conçu pour lire des données audio sous la forme d'un signal audio,
- une unité de données d'essai (1) selon l'une quelconque des revendications 1 à 8, et
- une unité de commande (12) selon l'une quelconque des revendications 12 à 14.

10. Système (7) selon la revendication 9, dans lequel l'unité de commande (12) est configurée pour commander l'appareil de lecture (8) à tester pour lire une partie prédéterminée d'un fichier prédéterminé (3) de l'unité de données d'essai (1).

11. Système (7) selon la revendication 9 ou 10, dans lequel l'unité de commande (12) vérifie, pour chacune des parties prédéterminées, si une section d'identification reçue (4) de la partie prédéterminée lors de la lecture correspond à la section d'identification (4) correspondante attendue du tableau de conversion (14).

12. Unité de commande (12) servant à tester un appareil de lecture (8), l'appareil de lecture (8) étant conçu pour lire des données audio sous la forme d'un signal audio et étant équipé d'une unité de données d'essai (1) selon l'une quelconque des revendications 1 à 8, l'unité de commande (12) comprenant
- un récepteur (13) permettant de recevoir ledit signal audio de l'appareil de lecture (8) lisant l'unité de données d'essai (1) et de décoder ledit signal audio reçu selon un procédé reflétant une variation de fréquence qui extrait les valeurs binaires (6) d'une section d'identification (4) reçue dudit signal audio reçu, et
- un vérificateur (16) servant à vérifier si la section d'identification (4) reçue du signal audio reçu correspond à une section d'identification (4) attendue par comparaison de ladite section d'identification (4) reçue à ladite section d'identification attendue,
**caractérisée en ce que** l'unité de commande (12) comprend un contrôleur d'appareil de lecture (15) permettant de contrôler l'appareil de lecture (8) à tester pour lire un fichier prédéterminé (3) de l'unité de données d'essai (1), et un tableau de conversion (14) contenant une séquence de parties prédéterminées de fichiers prédéterminés (3) de l'unité de données d'essai (1) et les sections d'identification (4) correspondantes attendues, le contrôleur d'appareil de lecture (15) étant configuré pour contrôler l'appareil de lecture (8) à tester pour qu'il lise successivement chacune des parties prédéterminées.

13. Unité de commande (12) selon la revendication 12, dans laquelle l'unité de commande (12) contient un contrôleur d'appareil de lecture (15) servant à contrôler l'appareil de lecture (8) à tester pour lire une partie prédéterminée d'un fichier prédéterminé (3) de l'unité de données d'essai (1).

14. Unité de commande (12) selon la revendication 12 ou 13, dans laquelle le vérificateur (16) de l'unité de commande (12) est configuré pour vérifier, pour chacune des parties prédéterminées, si une section d'identification (4) reçue de la partie prédéterminée lue correspond à la section d'identification (4) attendue correspondante du tableau de conversion (14).

15. Procédé d'essai d'un appareil de lecture (8), ce procédé comprenant les étapes suivantes :
- lire une unité de données d'essai (1) selon l'une quelconque des revendications 1 à 8 dans l'appareil de lecture (8) à tester,
- recevoir ledit signal audio de l'appareil de lecture (8) lisant l'unité de données d'essai (1).
- décoder ledit signal audio reçu selon un procédé reflétant la variation de fréquence qui extrait les valeurs binaires (6) d'une section d'identification (4) reçue dudit signal audio reçu, et
- vérifier si, lors de la lecture de la pluralité de fichiers (2) de l'unité de données d'essai (1) par l'appareil de lecture (8), le signal audio lu par l'appareil de lecture (8) contient la section d'identification (4) attendue par comparaison de ladite section d'identification (4) reçue à ladite section d'identification attendue, **caractérisé par** le contrôle de l'appareil de lecture (8) à tester pour qu'il lise successivement des parties prédéterminées de fichiers prédéterminés (3) de l'unité de données d'essai (1), un tableau de conversion (14) comprenant la séquence des parties prédéterminées des fichiers prédéterminés (3) de l'unité de données d'essai (1) et des sections d'identification (4) attendues correspondantes.
